# EUROPEAN PATENT APPLICATION

(11) **EP 4 575 739 A1**
(43) Date of publication of application: **25.06.2025**
(21) Application number: 23854461.3
(22) Date of filing: 16.08.2023
(51) Int. Cl.: G06F 3/04847, H04N 21/2187

(54) **LIVE BROADCAST DATA PROCESSING METHOD AND APPARATUS**

(30) Priority: 16.08.2022 CN 202210982116
(71) Applicant: Beijing Zitiao Network Technology Co., Ltd., Beijing 100190 (CN)
(72) Inventor: LIU, Zirui, Beijing 100028 (CN); DING, Shiling, Beijing 100028 (CN)
(74) Representative: Dentons UK and Middle East LLP
(86) International application number: PCT/CN2023/113313
(87) International publication number: WO 2024/037561

(57) **Abstract**

The present application discloses a live broadcast data processing method, which comprises: displaying a live broadcast connection line adversarial parameter setting interface, the live broadcast connection line adversarial parameter setting interface being used for setting live broadcast connection line adversarial parameters; receiving a live broadcast connection line adversarial parameter setting operation acting upon the live broadcast connection line adversarial parameter setting interface; and, in response to the live broadcast connection line adversarial parameter setting operation, obtaining a target live broadcast connection line adversarial parameter corresponding to the live broadcast connection line adversarial parameter setting operation, so that during interaction with a live broadcast connection line, the target live broadcast connection line adversarial parameter is used to determine a live broadcast connection line adversarial result.

## Description

The application claims priority to the Chinese patent application No. 202210982116.4, filed in China National Intellectual Property Administration, China on August 16, 2022 and entitled "LIVE BROADCAST DATA PROCESSING METHOD AND APPARATUS", the entire disclosure of which is incorporated herein by reference as part of the present disclosure.

### TECHNICAL FIELD

The present disclosure relates to the technical field of computer technology, in particular to a live broadcast data processing method and a live broadcast data processing apparatus.

### BACKGROUND

With the development of computer technology, users may initiate live broadcast through an application that provides a live broadcast function. In order to increase the interest of live broadcast, the application further provides a live broadcast connection confrontation function, and users can conduct live broadcast connection confrontation in the live broadcast process to attract more viewers.

At present, the live broadcast connection confrontation function is relatively simple and cannot meet the diverse needs of users, which affects the user experience.

### SUMMARY

In order to solve or partially solve the above technical problems, embodiments of the present disclosure provide a live broadcast data processing method and a live broadcast data processing apparatus.

In a first aspect, embodiments of the present disclosure provide a live broadcast data processing method, and the method comprises:
displaying a live broadcast connection confrontation parameter setting interface;
receiving a live broadcast connection confrontation parameter setting operation acting on the live broadcast connection confrontation parameter setting interface; and
in response to the live broadcast connection confrontation parameter setting operation, obtaining a target live broadcast connection confrontation parameter corresponding to the live broadcast connection confrontation parameter setting operation to determine a live broadcast connection confrontation result according to the target live broadcast connection confrontation parameter.

Optionally, the target live broadcast connection confrontation parameter comprises a parameter of at least one dimension, and the parameter of at least one dimension comprises:
an association relationship between at least one selected from a group consisting of a confrontation mode, a confrontation process index, the confrontation mode and the confrontation process index, and the confrontation result.

Optionally, the confrontation process index comprises:
an interaction amount corresponding to at least one interaction type obtained in a live broadcast connection confrontation process.

Optionally, the at least one interaction type comprises at least one selected from a group consisting of:
a like, a comment, and a gift of a virtual resource.

Optionally, in response to the live broadcast connection confrontation parameter setting operation, obtaining the target live broadcast connection confrontation parameter corresponding to the live broadcast connection confrontation parameter setting operation to determine the live broadcast connection confrontation result according to the target live broadcast connection confrontation parameter comprises:
in response to the live broadcast connection confrontation parameter setting operation, obtaining the target live broadcast connection confrontation parameter corresponding to the live broadcast connection confrontation parameter setting operation, and sending the target live broadcast connection confrontation parameter to a server, so that the server determines the live broadcast connection confrontation result according to the target live broadcast connection confrontation parameter during a live broadcast connection confrontation interaction.

Optionally, the method further comprises:
receiving the live broadcast connection confrontation result sent by the server; and
displaying the live broadcast connection confrontation result on a live broadcast interface.

Optionally, displaying the live broadcast connection confrontation parameter setting interface comprises:
in response to a connection confrontation initiation operation triggered on a live broadcast interface, determining a first live anchor and a second live anchor corresponding to the connection confrontation initiation operation, wherein display windows corresponding to the first live anchor and the second live anchor are displayed on the live broadcast interface;
displaying a connection confrontation mode selection interface; and
receiving a creation operation of a custom connection confrontation mode acting on the connection confrontation mode selection interface, and displaying the live broadcast connection confrontation parameter setting interface corresponding to the custom connection confrontation mode.

Optionally, the method further comprises:
displaying live broadcast connection confrontation summary information on the live broadcast interface; and
in response to a trigger operation for the live broadcast connection confrontation summary information, displaying live broadcast connection confrontation detail information.

In a second aspect, embodiments of the present disclosure provide a live broadcast data processing apparatus, and the apparatus comprises:
a first display unit, configured to display a live broadcast connection confrontation parameter setting interface;
a first receiving unit, configured to receive a live broadcast connection confrontation parameter setting operation acting on the live broadcast connection confrontation parameter setting interface; and
a first obtaining unit, configured to, in response to the live broadcast connection confrontation parameter setting operation, obtain a target live broadcast connection confrontation parameter corresponding to the live broadcast connection confrontation parameter setting operation to determine a live broadcast connection confrontation result according to the target live broadcast connection confrontation parameter.

Optionally, the target live broadcast connection confrontation parameter comprises a parameter of at least one dimension, and the parameter of at least one dimension comprises:
an association relationship between at least one selected from a group consisting of a confrontation mode, a confrontation process index, the confrontation mode and the confrontation process index, and the confrontation result.

Optionally, the confrontation process index comprises:
an interaction amount corresponding to at least one interaction type obtained in a live broadcast connection confrontation process.

Optionally, the at least one interaction type comprises at least one selected from a group consisting of
a like, a comment, and a gift of a virtual resource.

Optionally, the first obtaining unit is configured to,
in response to the live broadcast connection confrontation parameter setting operation, obtain the target live broadcast connection confrontation parameter corresponding to the live broadcast connection confrontation parameter setting operation, and send the target live broadcast connection confrontation parameter to a server, so that the server determines the live broadcast connection confrontation result according to the target live broadcast connection confrontation parameter during a live broadcast connection confrontation interaction.

Optionally, the live broadcast data processing apparatus further comprises:
a second obtaining unit, configured to receive the live broadcast connection confrontation result sent by the server; and
a second display unit, configured to display the live broadcast connection confrontation result on a live broadcast interface.

Optionally, the first display unit is configured to,
in response to a connection confrontation initiation operation triggered on a live broadcast interface, determine a first live anchor and a second live anchor corresponding to the connection confrontation initiation operation, in which display windows corresponding to the first live anchor and the second live anchor are displayed on the live broadcast interface;
display a connection confrontation mode selection interface; and
receive a creation operation of a custom connection confrontation mode acting on the connection confrontation mode selection interface, and display the live broadcast connection confrontation parameter setting interface corresponding to the custom connection confrontation mode.

Optionally, the live broadcast data processing apparatus further comprises:
a third display unit, configured to display live broadcast connection confrontation summary information on the live broadcast interface; and
a fourth display unit, configured to, in response to a trigger operation for the live broadcast connection confrontation summary information, display live broadcast connection confrontation detail information.

In a third aspect, embodiments of the present disclosure provide a device, and the device comprises a processor and a memory;
the processor is configured to execute instructions stored in the memory to cause the device to implement the method according to any one of the embodiments of the above-mentioned first aspect.

In a fourth aspect, embodiments of the present disclosure provide a computer-readable storage medium comprising instructions, and the instructions instruct a device to implement the method according to any one of the embodiments of the above-mentioned first aspect.

In a fifth aspect, embodiments of the present disclosure provide a computer program product, and upon the computer program product being operated on a computer, the method according to any one of the embodiments of the above-mentioned first aspect is implemented by the computer.

### BRIEF DESCRIPTION OF DRAWINGS

In order to more clearly explain the embodiments of the present disclosure or the technical scheme in the prior art, the drawings needed in the description of the embodiments or the prior art will be briefly introduced below. Obviously, the drawings in the following description are only some embodiments recorded in the present disclosure, and other drawings can be obtained according to these drawings without creative work for those with ordinary skill in the art.
Fig. 1 is a schematic flow diagram of a live broadcast data processing method according to an embodiment of the present disclosure.
Fig. 2a to Fig. 2f are schematic diagrams of a live broadcast interface according to an embodiment of the present disclosure;
Fig. 3 is a schematic structural diagram of a live broadcast data processing apparatus according to an embodiment of the present disclosure.

### DETAILED DESCRIPTION

In order to make those skilled in the art better understand the scheme of the present disclosure, the technical scheme in the embodiments of the present disclosure will be described clearly and completely with the attached drawings. Obviously, the described embodiments are only a part of the embodiments of the present disclosure, but not the entire embodiments. Based on the embodiments of the present disclosure, all other embodiments obtained by those with ordinary skill in the art without creative work belong to the protection scope of the present disclosure.

The inventors of the present disclosure have found through research that at present, the applications further provide a live broadcast connection confrontation function. Users can conduct live broadcast connection confrontation in the live broadcast process to attract more viewers. When users conduct a live broadcast connection confrontation, the live broadcast connection confrontation parameter may be used to determine the live broadcast connection confrontation result. For example, the number of likes obtained by a live anchor in the live broadcast connection confrontation process may be used to determine the live broadcast connection confrontation result. However, at present, the live broadcast connection confrontation parameter used to determine the live broadcast connection confrontation result is preset, and using the preset live broadcast connection confrontation parameter to determine the live broadcast connection confrontation result often cannot meet the needs of a live anchor.

In order to solve the above problems, embodiments of the present disclosure provide a live broadcast data processing method and a live broadcast data processing apparatus. In one example, the method may be performed by a client. As one example, the client may display a live broadcast connection confrontation parameter setting interface, and the live broadcast connection confrontation parameter setting interface is used to set the live broadcast connection confrontation parameter. The user may trigger a live broadcast connection confrontation parameter setting operation through the live broadcast connection confrontation parameter setting interface to set the live broadcast connection confrontation parameter. Specifically, the client may receive a live broadcast connection confrontation parameter setting operation acting on the live broadcast connection confrontation parameter setting interface, and in response to the live broadcast connection confrontation parameter setting operation, obtain a target live broadcast connection confrontation parameter corresponding to the live broadcast connection confrontation parameter setting operation, so as to determine a live broadcast connection confrontation result according to the target live broadcast connection confrontation parameter during a live broadcast connection interaction. It can be seen that using the scheme of the embodiment of the present disclosure, the user can set the target live broadcast connection confrontation parameter according to his/her own needs, thereby enriching the live broadcast interaction function, satisfying the diverse needs of the user, and improving the user experience of using the live broadcast connection confrontation function.

In one example, the live broadcast connection confrontation may also be referred to as live broadcast connection PK, and accordingly, the confrontation value mentioned hereinafter may also be referred to as a PK value.

In yet another example, the live broadcast connection confrontation may also be referred to as a live broadcast connection contest.

Various non-limiting embodiments of the present disclosure are described in detail hereinafter with reference to the attached drawings.

### Exemplary Method

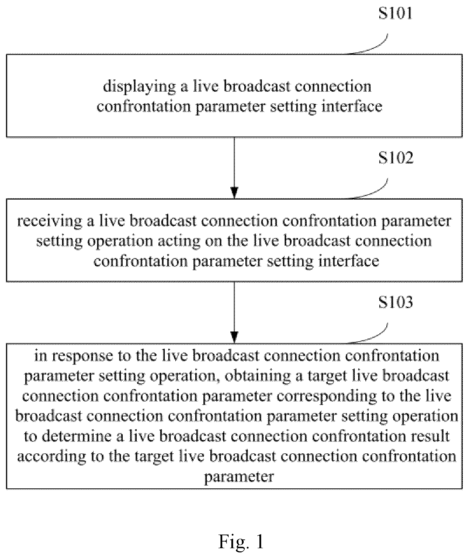

Referring to FIG. 1, FIG. 1 is a schematic flow diagram of a live broadcast data processing method according to an embodiment of the present disclosure. In one example, the method provided by an embodiment of the present disclosure may be implemented by a client. The client may be, for example, a client corresponding to a live anchor. In one example, the client may be a client corresponding to a first live anchor mentioned hereinafter.

In the present embodiment, the method may comprise, for example, the following steps: S101 to S103.

S101: displaying a live broadcast connection confrontation parameter setting interface.

In an embodiment of the present disclosure, the live broadcast connection confrontation parameter setting interface is used to set the live broadcast connection confrontation parameter. The embodiment of the present disclosure does not specifically limit the live broadcast connection confrontation parameter, the live broadcast connection confrontation parameter may be a parameter related to the live broadcast connection confrontation, for example, the live broadcast connection confrontation parameter may comprise a live broadcast parameter in the process of the live broadcast connection confrontation.

As one example, the live broadcast connection confrontation parameter may be a parameter used to calculate a live broadcast connection confrontation result. In a specific example, the live broadcast connection confrontation parameter may comprise a parameter of at least one dimension, and the parameter of the at least one dimension may comprise an association relationship between at least one selected from a group consisting of a confrontation mode, a confrontation process index, the confrontation mode and the confrontation process index, and the confrontation result.

For a detailed description of the association relationship between , reference can be made to the following related description, which will not be described in detail here.

In one example, a live broadcast interface may be displayed on the client, and the live broadcast connection confrontation parameter setting interface may be one interface of the live broadcast interfaces. For example, the live broadcast connection confrontation parameter setting interface may be displayed on the live broadcast interface in the form of a floating layer.

In one example, the live broadcast interface may comprise live broadcast images corresponding to a plurality of live anchors, and the live broadcast images corresponding to the plurality of live anchors may comprise a live broadcast image corresponding to a first live anchor and a live broadcast image corresponding to a second live anchor. In one example, the live broadcast interface may comprise a first display region and a second display region, the first display region is used for displaying the live broadcast image corresponding to the first live anchor, and the second display region is used for displaying the live broadcast image corresponding to the second live anchor.

In one example, the client may display the live broadcast connection confrontation parameter setting interface in the form of a floating layer on the live broadcast interface in response to a preset operation triggered by the user on the live broadcast interface.

In one example, S101 may be implemented by the following Steps A1-A3.

Step A1: in response to a connection confrontation initiation operation triggered on the live broadcast interface, determining a first live anchor and a second live anchor corresponding to the connection confrontation initiation operation, in which display windows corresponding to the first live anchor and the second live anchor are displayed on the live broadcast interface.

The display window corresponding to the first live anchor mentioned herein is used to display the live broadcast image of the first live anchor, and the display window corresponding to the first live anchor may be displayed, for example, in the first display region. The display window corresponding to the second live anchor mentioned herein is used to display the live broadcast image of the second live anchor, and the display window corresponding to the second live anchor may be displayed, for example, in the second display region.

In one example, the live broadcast interface may comprise a first control for triggering the connection confrontation initiation operation. The user may trigger the connection confrontation initiation operation through the first control, and correspondingly, the client may receive the connection confrontation initiation operation.

After triggering the connection confrontation initiation operation, the user may further select a live anchor participating in the connection confrontation. In one example, after receiving the connection confrontation initiation operation, the client may display a selection control in a display region of a live broadcast image corresponding to each live anchor on the live broadcast interface, and the user may select a live anchor participating in the live broadcast connection confrontation through the selection control corresponding to each live anchor. In one example, the user may select the second live anchor as the live anchor participating in the live broadcast connection confrontation. Because the first live anchor is an initiator of the live broadcast connection confrontation, the first live anchor is a participant of the live broadcast connection confrontation by default. Correspondingly, after the user selects the second live anchor as the live anchor participating in the live broadcast connection confrontation, the client may determine the first live anchor and the second live anchor as the live anchors participating in the live broadcast connection confrontation.

Step A2: displaying a connection confrontation mode selection interface.

Step A3: receiving a creation operation of a custom connection confrontation mode acting on the connection confrontation mode selection interface, and displaying the live broadcast connection confrontation parameter setting interface corresponding to the custom connection confrontation mode.

In one example, after determining the first live anchor and the second live anchor, the client may display the connection confrontation mode selection interface in the form of a floating layer on the live broadcast interface. For example, the client may display the connection confrontation mode selection interface in the form of a floating layer in a preset region (such as a bottom) on the live broadcast interface. The user may trigger a creation operation of a custom connection confrontation mode in the connection confrontation mode selection interface. For example, the connection confrontation mode selection interface may comprise a second control which is configured for triggering the creation operation of the custom connection confrontation mode. The user may trigger the creation operation of the custom connection confrontation mode through the second control. For example, the user may click a region where the second control is located to trigger the creation operation of the custom connection confrontation mode. Correspondingly, the client may receive the creation operation of the custom connection confrontation mode acting on the connection confrontation mode selection interface, and display the live broadcast connection confrontation parameter setting interface corresponding to the custom connection confrontation mode in response to the creation operation of the custom connection confrontation mode.

In addition, in one example, the user may further trigger a selection operation of a conventional connection confrontation mode in the connection confrontation mode selection interface. The conventional connection confrontation mode may be a default connection confrontation mode provided by the client. In yet another example, the user may further trigger a selection operation of a recommended live broadcast connection confrontation mode on the connection confrontation mode selection interface. Regarding the recommended live broadcast connection confrontation method, the live broadcast connection confrontation result may be determined based on a recommended live broadcast connection confrontation parameter. The recommended live broadcast connection confrontation parameter may refer to the section of the relevant descriptions of Steps C1-C5 hereinafter, which will not be described in detail here.

Steps A1-A3 are now be described by an example with reference to the attached drawings.

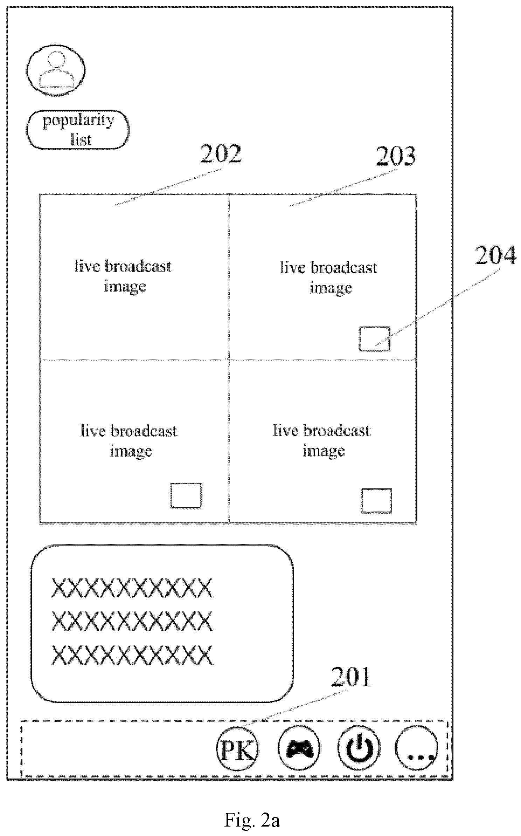

Referring to FIG. 2a, FIG. 2a is a schematic diagram of a live broadcast interface according to an embodiment of the present disclosure.

As shown in FIG. 2a, the live broadcast interface comprises a first control 201, a first display region 202, and a second display region 203, the first display region 202 is used for displaying the live broadcast image corresponding to the first live anchor, and the second display region 203 is used for displaying the live broadcast image corresponding to the second live anchor. The display regions for displaying the live broadcast images corresponding to other live anchors displayed on the live broadcast interface are not be described in detail here.

After the user triggers the connection confrontation initiation operation through the first control, a selection control corresponding to each live broadcast image, for example, a selection control 204 shown in FIG. 2a, is displayed on the live broadcast interface.

After the user triggers the trigger operation through the selection control 204, the client determines that the live anchors participating in the live broadcast connection confrontation comprise a first live anchor and a second live anchor.

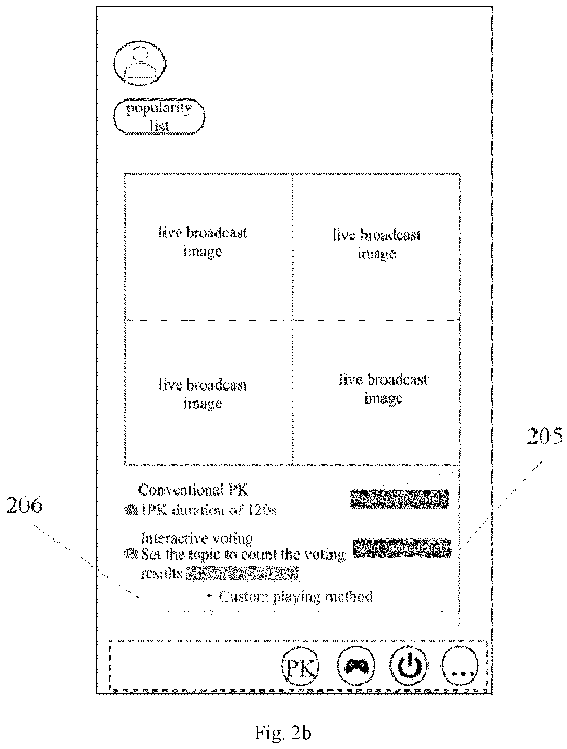

Further, the live broadcast interface displayed by the client is updated as shown in FIG. 2b. As shown in FIG. 2b, the live broadcast interface comprises a connection confrontation mode selection interface 205 displayed in the form of a floating layer. The connection confrontation mode selection interface 205 comprises a second control 206, the user may trigger the creation operation of the custom connection confrontation mode through the second control. Correspondingly, the client may receive the creation operation of the custom connection confrontation mode.

After receiving the creation operation of the live broadcast connection confrontation mode, the client may display a live broadcast connection confrontation parameter setting interface. In one example, the page displayed by the client may jump from the current page (e.g., the live broadcast interface) to the live broadcast connection confrontation parameter setting interface. In yet another example, the client may display the live broadcast connection confrontation parameter setting interface in the form of a floating layer on the live broadcast interface described above. For example, a first connection confrontation mode selection interface displayed in the client is switched to the live broadcast connection confrontation parameter setting interface. In this way, the user not only can view the live broadcast image, but also view the live broadcast connection confrontation parameter setting interface.

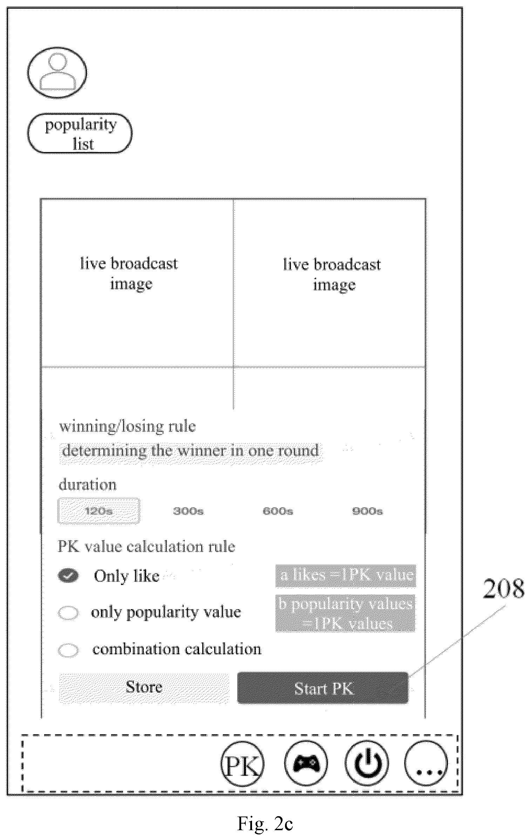

For example, after the client receives the creation operation of the custom connection confrontation mode, the live broadcast interface displayed by the client is updated as shown in FIG. 2c. The value interface shown in FIG. 2c comprises a live broadcast connection confrontation parameter setting interface 207 displayed in the form of a floating layer, the user may set the target live broadcast connection confrontation parameter in the live broadcast connection confrontation parameter setting interface. For example, as shown in FIG. 2c, the user sets that the winner is determined in one round, the duration of a single round of live broadcast connection is 120 seconds, and the confrontation value calculation rule is only using likes to calculate the confrontation value.

S102: receiving a live broadcast connection confrontation parameter setting operation acting on the live broadcast connection confrontation parameter setting interface.

S103: in response to the live broadcast connection confrontation parameter setting operation, obtaining a target live broadcast connection confrontation parameter corresponding to the live broadcast connection confrontation parameter setting operation to determine a live broadcast connection confrontation result according to the target live broadcast connection confrontation parameter.

In an embodiment of the present disclosure, the live broadcast connection confrontation parameter setting interface is configured to set the live broadcast connection confrontation parameter. The user may set the live broadcast connection confrontation parameter in the live broadcast connection confrontation parameter setting interface, so as to determine the live broadcast connection confrontation result using the live broadcast connection confrontation parameter in the subsequent live broadcast connection confrontation interaction.

In one example, in response to the live broadcast connection confrontation parameter setting operation, obtaining the target live broadcast connection confrontation parameter corresponding to the live broadcast connection confrontation parameter setting operation to determine the live broadcast connection confrontation result according to the target live broadcast connection confrontation parameter may comprise, in response to the live broadcast connection confrontation parameter setting operation, obtaining the target live broadcast connection confrontation parameter corresponding to the live broadcast connection confrontation parameter setting operation to obtain the live broadcast connection confrontation result determined according to the target live broadcast connection confrontation parameter. Specifically, the client may determine the live broadcast connection confrontation result according to the live broadcast connection confrontation parameter, or the server may determine the live broadcast connection confrontation result according to the live broadcast connection confrontation parameter, and send the live broadcast connection confrontation result to the client, that is, the client obtains the live broadcast connection confrontation result determined by the server.

The determining the live broadcast connection confrontation result based on the live broadcast connection confrontation parameter mentioned herein may comprise, for example, determining the live broadcast connection confrontation result based on confrontation values corresponding to each live anchor participating in the live broadcast connection confrontation. In one example, the live anchor with the highest corresponding confrontation value wins the live broadcast connection confrontation.

In one example, after the user triggers the live broadcast connection confrontation parameter setting operation in the live broadcast connection confrontation parameter setting interface, the client may receive the live broadcast connection confrontation parameter setting operation acting on the live broadcast connection confrontation parameter setting interface, and obtain the target live broadcast connection confrontation parameter corresponding to the live broadcast connection confrontation parameter setting operation in response to the live broadcast connection confrontation parameter setting operation. In other words, in an embodiment of the present disclosure, the live broadcast connection confrontation parameter set by the user in the live broadcast connection confrontation parameter setting interface is the target live broadcast connection confrontation parameter.

In an embodiment of the present disclosure, the target live broadcast connection confrontation parameter is the live broadcast connection confrontation parameter set by the user in the live broadcast connection confrontation parameter setting interface. The embodiment of the present disclosure does not specifically limit the target live broadcast connection confrontation parameter, and the target live broadcast connection confrontation parameter may comprise one or more parameters related to the live broadcast.

As can be seen from the previous description of the live broadcast connection confrontation parameter, the live broadcast connection confrontation parameter may comprise a parameter of at least one dimension. The parameter of at least one dimension may comprise, for example, an association relationship between . However, since actually, the target live broadcast connection confrontation parameter is an index connection confrontation parameter set by the user, in one example, the target live broadcast connection confrontation parameter may further comprise the parameter of at least one dimension described above.

The parameter of at least one dimension may comprise, for example, parameters such as an association relationship between .

As one example, the confrontation mode mentioned in an embodiment of the present disclosure may be a mode of carrying out a live broadcast connection confrontation. In one example, the confrontation mode may be used to indicate a total number of confrontation rounds of a live broadcast connection confrontation. In one example, the confrontation mode processing may be used to indicate, in addition to the overall discussion, the number of confrontation rounds of winning required to win the live broadcast connection confrontation. As one example, the confrontation mode may be, for example, determining the winner in one round, that is, a round of the live broadcast connection confrontation is initiated, and the winner of the round of the live broadcast connection confrontation is the winner of the final live broadcast connection confrontation. As another example, the parameter of the winning/losing rule dimension may be N wins in M rounds, where M is greater than or equal to N, and both M and N are positive integers, for example, 2 wins in 3 rounds. That is, three rounds of live broadcast connection confrontations are initiated, and the live anchor who wins two rounds among the three rounds is the winner of the final live broadcast connection confrontation.

In one example, the confrontation process index may be a related index generated in a live broadcast connection confrontation process. For example, the confrontation process index may comprise the interactive data generated in a live broadcast connection confrontation process.

In one example, the confrontation process index is used to determine a confrontation value that is used to determine a single-round live broadcast connection confrontation result. In one example, in a certain round of the live broadcast connection confrontation, the live anchor with a high corresponding confrontation value wins the live broadcast connection confrontation.

The confrontation process index may comprise one or more parameters related to the live broadcast. In one example, the confrontation process index may comprise an interaction amount corresponding to at least one interaction type obtained in the live broadcast connection confrontation process. The interaction type provided by an embodiment of the present disclosure may be, for example, an interaction type in which a viewer interacts with a live anchor. The interaction type may be any one or more types of interaction that the viewer may perform with the live anchor. As one example, the interaction type may be a like, a comment, and a gift of a virtual resource.

The embodiment of the present disclosure does not specifically limit the virtual resource, and the virtual resource may comprise, for example, a virtual gift.

Further, the parameter of at least one dimension may be a confrontation duration, and the confrontation duration may be, for example, a confrontation duration of a single round of the live broadcast connection confrontation.

The confrontation result in an embodiment of the present disclosure may be, for example, the confrontation value mentioned above, or for another example, may be the winning/losing result of the live broadcast connection confrontation.

The association relationship between the confrontation mode and the confrontation result may be, for example, determining the confrontation result based on the sum of the confrontation values of each round of the live broadcast connection confrontation. For example, there are a total of 3 rounds of the live broadcast connection confrontations, and the live anchor with the highest sum of confrontation values of the 3 rounds wins.

The association relationship between the confrontation process index and the confrontation result may be the conversion relationship between the confrontation process index and the confrontation value. For example, a like corresponds to a confrontation value.

In one example, the conversion relationship between the confrontation process index and the confrontation value may be set by the user. For example, the user may set that a like is converted into a confrontation value, or ten likes are converted into a confrontation value, and the like, which are not listed here one by one.

Taking a first index in the confrontation process index as an example, a setting mode of setting the conversion relationship between the first index and the confrontation value is introduced.

In one example, the user may trigger the conversion relationship setting operation for the first index in the live broadcast connection confrontation parameter setting interface, for example, trigger the conversion relationship setting operation for the first index in a specific region among the regions for displaying the first index in the live broadcast connection confrontation parameter setting interface. The preset region mentioned herein may be, for example, a specific region among the regions for displaying the first index. For example, in the case where the first index is a like, the preset region may be, for example, a region in which "a likes = 1 PK value" is displayed as shown in FIG. 2c below. After the user triggers the conversion relationship setting operation for the first index, the client may display the conversion relationship setting interface in response to the conversion relationship setting operation for the first index, and the user may trigger the conversion relationship setting operation in the conversion relationship setting interface, thereby setting the conversion relationship between the first index and the confrontation value. For example, the conversion relationship setting interface may comprise a plurality of alternative conversion relationships between the first index and the confrontation value, and the user may select one conversion relationship from the plurality of alternative conversion relationships as the conversion relationship between the first index and the confrontation value. As another example, the user may input the conversion relationship between the first index and the confrontation value in the conversion relationship setting interface. As can be seen from the above description, using the solution provided by embodiments of the present disclosure, the user may set the target live broadcast connection confrontation parameter according to his/her own needs, so that the live broadcast connection confrontation result can be determined according to the target live broadcast connection confrontation parameter set by the user, and the user experience of using the live broadcast connection confrontation function is improved.

In one example, after obtaining the target live broadcast connection confrontation parameter, the client may send the target live broadcast connection confrontation parameter to the server, so that the server determines the live broadcast connection confrontation result based on the target live broadcast connection parameter. In one example, the server may determine the confrontation values corresponding to the first live anchor and the second live anchor in each round of the live broadcast connection confrontation and the live broadcast connection confrontation result of each round of the live broadcast connection confrontation, and send the confrontation values corresponding to the first live anchor and the second live anchor in each round of the live broadcast connection confrontation and the live broadcast connection confrontation result of each round of the live broadcast connection confrontation to the client corresponding to the first live anchor and the client corresponding to the second live anchor. In addition, the server may determine a final live broadcast connection confrontation result according to the live broadcast connection confrontation result of each round of the live broadcast connection confrontation, and send the final live broadcast connection confrontation result to the client corresponding to the first live anchor and the client corresponding to the second live anchor. Correspondingly, the client may receive the live broadcast connection confrontation result sent by the server, and display the live broadcast connection confrontation result on the live broadcast interface.

In one example, after the user triggers the connection confrontation initiation operation on the live broadcast interface and sets the target live broadcast connection confrontation parameter, the user may further trigger a first connection confrontation confirmation operation. The first connection confrontation confirmation operation may be used to confirm the start of the live broadcast connection confrontation. The participants of the live broadcast connection confrontation comprise a first live anchor and a second live anchor. After receiving the first connection confrontation confirmation operation, the client may store the target live broadcast connection confrontation parameter in response to the first connection confrontation confirmation operation.

In addition, the client may also display the live broadcast connection confrontation summary information in the third display region of the live broadcast interface, so that the user may view the live broadcast connection confrontation summary information. The live broadcast connection confrontation summary information mentioned herein may be summary information related to the target live broadcast connection confrontation parameter, and may comprise, for example, one or more parameters of the target live broadcast connection confrontation parameters, for another example, the duration of the live broadcast connection confrontation, and for another example, the remaining duration of the live broadcast connection confrontation, and the like.

The third display region mentioned herein may comprise a part of the first display region and a part of the second display region, so that the user confirms that the participants of the live broadcast connection confrontation comprise the first live anchor and the second live anchor.

The setting of the target live broadcast connection confrontation parameter and the corresponding live broadcast interface are now described by way of example with reference to the attached drawings.

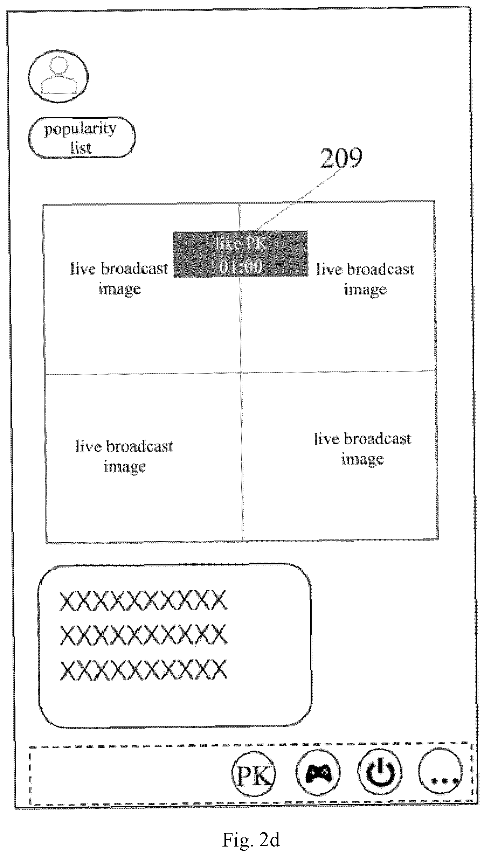

In one example, after the user triggers the creation operation of the live broadcast connection confrontation mode through the second control 206 on the live broadcast interface shown in FIG. 2b, the live broadcast interface displayed by the client is updated as shown in FIG. 2c, and the live broadcast interface shown in FIG. 2c may further comprise a control 208 for triggering the connection confrontation confirmation operation. The user may trigger a first connection confrontation confirmation operation through the control 208. After the user triggers the first connection confrontation confirmation operation, the live broadcast interface displayed by the client is switched as shown in FIG. 2d. As shown in FIG. 2d, the live broadcast interface comprises live broadcast connection confrontation summary information 209.

In one example, the user may, for example, click a region where the live broadcast connection confrontation summary information is located for the trigger operation for the live broadcast connection confrontation summary information. Correspondingly, the client may display live broadcast connection confrontation detail information in response to the trigger operation for the live broadcast connection confrontation summary information. The live broadcast connection confrontation detail information may comprise, for example, the target live broadcast connection confrontation parameter and a setting party of the target live broadcast connection confrontation parameter.

In one example, the client may display a first interface in the form of a floating layer on the live broadcast interface, and display the live broadcast connection confrontation detail information in the first interface.

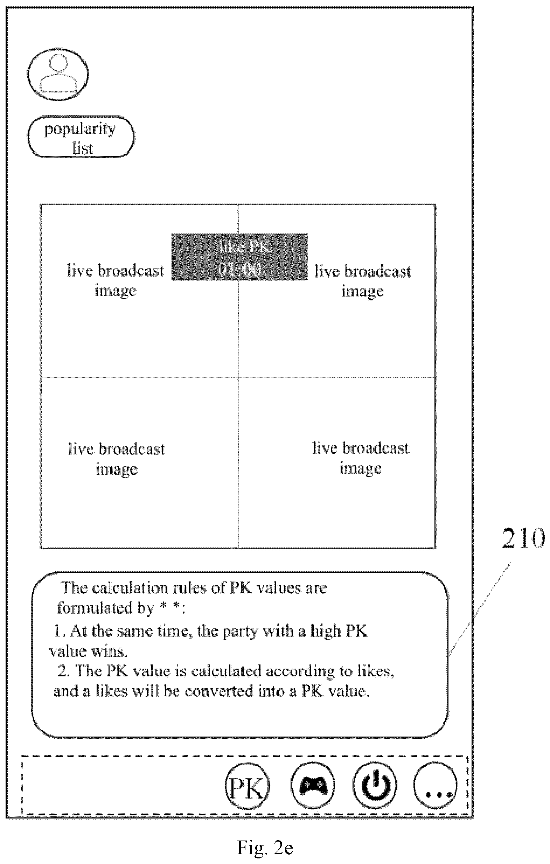

As described by way of example with reference to the attached drawings, after the user triggers the trigger operation for a first live broadcast connection confrontation summary information 209 shown in FIG. 2d, the first interface 210 shown in FIG. 2e is displayed on the live broadcast interface, and the live broadcast connection confrontation detail information described above is displayed in the first interface 210.

In one example, in order to facilitate the user (live anchor) to determine the detailed information of the confrontation value obtained by the user, the user may further trigger a detailed viewing operation of the confrontation value of the live broadcast connection confrontation. Correspondingly, the client may display the detailed information of the confrontation value of the first live anchor in response to the detailed viewing operation. The detailed information of the confrontation value comprises the live broadcast of each confrontation process and the confrontation value contributed by each confrontation process index. In one example, the detailed information of the confrontation value of the first live anchor may be sent by the server to the client. The detailed information will now be described by way of example.

The detailed information may comprise: obtaining a total of 400 confrontation values, in which: 100 likes contribute 100 confrontation values, 100 comments contribute 100 confrontation values, and 20 virtual resources 1 contribute 200 confrontation values.

In one example, the user may trigger the detail viewing operation through a third control, and the third control may be located, for example, in the live broadcast interface. For example, in some embodiments, the third control may be located on a second interface displayed on the live broadcast interface in the form of a floating layer. The second interface may comprise other information, for example, comprise information of viewers with higher contribution confrontation values. In this way, when the user views the information of the viewers with higher contribution confrontation values, the user may see the third control, and thus trigger the detailed viewing operation based on the third control. From viewing the information of the viewers with higher contribution confrontation values to triggering the detailed viewing operation based on the third control, the user has no visual jump visually, and the user experience is excellent.

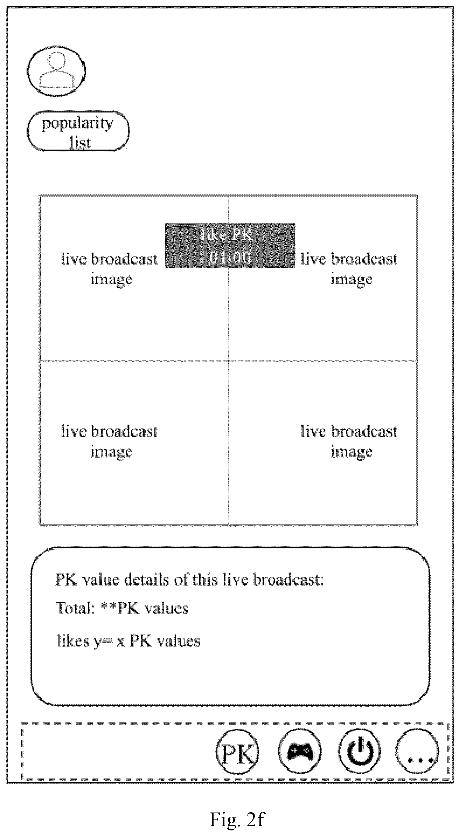

As described by way of example with reference to the attached drawings, after the user triggers the detailed viewing operation based on the third control, the live broadcast interface displayed by the client is as shown in FIG. 2f. The interface displayed in the form of a floating layer at the bottom of the live broadcast interface comprises the detailed operation.

In one example, after setting the target live broadcast connection confrontation parameter, the user may store the target live broadcast connection confrontation parameter. Correspondingly, when initiating the live broadcast connection confrontation subsequently, the first live anchor may directly initiate the live broadcast connection confrontation based on the target live broadcast connection confrontation parameter without the user resetting the target live broadcast connection confrontation parameter, thereby simplifying the user operation and further improving the user experience. Specifically, in one example, the client may also perform the following Steps B1-B5.

Step B1: receiving a first connection confrontation initiation operation triggered on a first live broadcast interface, in which the first live broadcast interface comprises a live broadcast image of a first live anchor and a live broadcast image of a third live anchor.

Step B2: determining the first live anchor and the third live anchor corresponding to the first connection confrontation initiation operation, in which the first live anchor and the third live anchor are live anchors participating in the live broadcast connection confrontation.

Step B3: displaying a first connection confrontation mode selection interface in the form of a floating layer on the first live broadcast interface.

The specific implementation of Steps B1-B3 is similar to that of Steps A1-A2. Therefore, the related description may refer to the section of the specific description in Steps A1-A2 above, which will not be described here.

Step B4: receiving the target live broadcast connection confrontation parameter selected in the first connection confrontation mode selection interface.

In one example, the first connection confrontation mode selection interface may comprise an identifier of the target live broadcast connection confrontation parameter, and the user may trigger a selection operation through the identifier of the target live broadcast connection confrontation parameter, thereby realizing the selection of the target live broadcast connection confrontation parameter. The identifier of the target live broadcast connection confrontation parameter may be, for example, some parameters of the target live broadcast connection confrontation parameters.

The first connection confrontation mode selection interface may refer to the connection confrontation mode selection interface 205 shown in FIG. 2b. The difference between the first connection confrontation mode selection interface and the connection confrontation mode selection interface 205 is that the first connection confrontation mode selection interface may comprise the identifier of the target live broadcast connection confrontation parameter.

Step B5: receiving a second connection confrontation confirmation operation, displaying the first live broadcast connection confrontation summary information on the first live broadcast interface, in which the target live broadcast connection confrontation parameter is used to determine the live broadcast connection confrontation result of the first live anchor and the third live anchor, and the first live broadcast connection summary information is the summary information related to the target live broadcast connection information.

The "second connection confrontation confirmation operation" may refer to the above-described section of the relevant description of the "first connection confrontation confirmation operation", which will not be described in detail here.

The first live broadcast connection confrontation summary information may refer to the above-described section of the description of the live broadcast connection confrontation summary information, which will not be described in detail here.

The specific implementation of "displaying the first live broadcast connection confrontation summary information on the first live broadcast interface" may refer to the above-described section of the relevant description of "displaying the live broadcast connection confrontation summary information on the live broadcast interface", which will not be repeated here.

In one example, in order to simplify the user operation and further improve the user experience, the server may further send the recommended live broadcast connection confrontation parameter to the client, so that the user may initiate the live broadcast connection confrontation based on the recommended live broadcast connection confrontation parameter. Specifically, in one example, the client may also perform the following Steps C1-C5.

Step C1: receiving a second connection confrontation initiation operation triggered on a second live broadcast interface, in which the second live broadcast interface comprises a live broadcast image of a first live anchor and a live broadcast image of a fourth live anchor.

Step C2: determining the first live anchor and the fourth live anchor corresponding to the second connection confrontation initiation operation, in which the first live anchor and the fourth live anchor are live anchors participating in the live broadcast connection confrontation.

Step C3: displaying a second connection confrontation mode selection interface in the form of a floating layer on the second live broadcast interface.

The specific implementation of Steps C1-C3 is similar to that of Steps A1-A2. Therefore, the related description may refer to the section of the specific description in Steps A1-A3 above, which will not be described here.

Step C4: receiving the recommended live broadcast connection confrontation parameter selected in the second connection confrontation mode selection interface, in which the recommended live broadcast connection confrontation parameter is the live broadcast connection confrontation parameter which is determined by the server and meets a preset condition.

In one example, the second connection confrontation mode selection interface may comprise an identifier of the recommended live broadcast connection confrontation parameter, and the user may trigger a selection operation through the identifier of the recommended live broadcast connection confrontation parameter, thereby realizing the selection of the recommended live broadcast connection confrontation parameter. The identifier of the recommended live broadcast connection confrontation parameter may be, for example, some information of the recommended live broadcast connection confrontation parameter.

The second connection confrontation mode selection interface may refer to the connection confrontation mode selection interface 205 shown in FIG. 2b. The difference between the second connection confrontation mode selection interface and the connection confrontation mode selection interface 205 is that the second connection confrontation mode selection interface may comprise the identifier of the recommended live broadcast connection confrontation parameter.

The embodiments of the present disclosure do not specifically limit the preset condition.

In one example, the preset condition may be, for example, that the number of usage times of the recommended live broadcast connection confrontation parameter is greater than a certain threshold. For example, the server may count the live broadcast connection confrontation parameters used by each client to initiate the live broadcast connection confrontation, obtain the live broadcast connection confrontation parameters whose the number of usage times is higher than a certain threshold, and determine the live broadcast connection confrontation parameter as the recommended live broadcast connection confrontation parameter.

In yet another example, the preset condition may be that the usage frequency of the recommended live broadcast connection confrontation parameter within a certain period of time is greater than a certain threshold. For example, the server may count the live broadcast connection confrontation parameters used by each client to initiate the live broadcast connection confrontation within a certain period of time, obtain the usage frequency of each live broadcast connection confrontation parameter within the certain period of time, and determine the live broadcast connection confrontation parameter whose usage frequency is higher than a certain threshold as the recommended live broadcast connection parameter.

Step C5: receiving a third connection confrontation confirmation operation, displaying the second live broadcast connection confrontation summary information on the second live broadcast interface, in which the recommended live broadcast connection confrontation parameter is used to determine the live broadcast connection confrontation result of the first live anchor and the fourth live anchor, and the second live broadcast connection confrontation summary information is the summary information related to the recommended live broadcast connection confrontation parameter.

The "third connection confrontation confirmation operation" may refer to the above-described section of the relevant description of the "first connection confrontation confirmation operation", which will not be described in detail here.

The second live broadcast connection confrontation summary information may refer to the above-described section of the description of the live broadcast connection confrontation summary information, which will not be described in detail here.

The specific implementation of "displaying the second live broadcast connection confrontation summary information on the second live broadcast interface" may refer to the above-described section of the relevant description of "displaying the live broadcast connection confrontation summary information on the live broadcast interface", which will not be described here.

It should be noted that FIG. 2a to FIG. 2f are only illustrated for understanding the relevant content of the present solution, and do not constitute a limitation of the embodiment of the present disclosure.

### Exemplary device

In addition to the method provided in the above embodiment, the embodiment of the application also provides an apparatus, which will be introduced with the attached drawings.

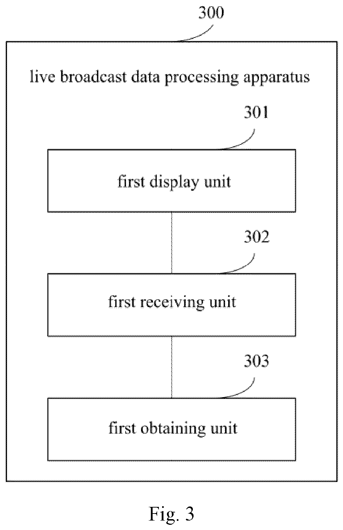

Referring to FIG. 3 which is a structural schematic diagram of a live broadcast data processing apparatus provided by an embodiment of the present application. The apparatus 300 may specifically include, for example, a first display unit 301, a first receiving unit 302, and a first obtaining unit 303.

The first display unit 301, configured to display a live broadcast connection confrontation parameter setting interface;

the first receiving unit 302, configured to receive a live broadcast connection confrontation parameter setting operation acting on the live broadcast connection confrontation parameter setting interface; and

the first obtaining unit 303, configured to, in response to the live broadcast connection confrontation parameter setting operation, obtain a target live broadcast connection confrontation parameter corresponding to the live broadcast connection confrontation parameter setting operation to determine a live broadcast connection confrontation result according to the target live broadcast connection confrontation parameter.

Optionally, the target live broadcast connection confrontation parameter comprises a parameter of at least one dimension, and the parameter of at least one dimension comprises:
an association relationship between .

Optionally, the confrontation process index comprises:
an interaction amount corresponding to at least one interaction type obtained in a live broadcast connection confrontation process.

Optionally, the at least one interaction type comprises at least one selected from a group consisting of
a like, a comment, and a gift of a virtual resource.

Optionally, the first obtaining unit 303 is configured to,
in response to the live broadcast connection confrontation parameter setting operation, obtaining the target live broadcast connection confrontation parameter corresponding to the live broadcast connection confrontation parameter setting operation, and sending the target live broadcast connection confrontation parameter to a server, so that the server determines the live broadcast connection confrontation result according to the target live broadcast connection confrontation parameter during a live broadcast connection confrontation interaction.

Optionally, the live broadcast data processing apparatus further comprises:
a second receiving unit, configured to receive the live broadcast connection confrontation result sent by the server; and
a second display unit, configured to display the live broadcast connection confrontation result on a live broadcast interface.

Optionally, the first display unit 301 is configured to
in response to a connection confrontation initiation operation triggered on a live broadcast interface, determine a first live anchor and a second live anchor corresponding to the connection confrontation initiation operation, in which display windows corresponding to the first live anchor and the second live anchor are displayed on the live broadcast interface;
display a connection confrontation mode selection interface;
receive a creation operation of a custom connection confrontation mode acting on the connection confrontation mode selection interface, and display the live broadcast connection confrontation parameter setting interface corresponding to the custom connection confrontation mode.

Optionally, the live broadcast data processing apparatus further comprises:
a third display unit, configured to display live broadcast connection confrontation summary information on the live broadcast interface; and
a fourth display unit, configured to, in response to a trigger operation for the live broadcast connection confrontation summary information, display live broadcast connection confrontation detail information.

Because the apparatus 300 is a device corresponding to the live broadcast data processing method provided in the above method embodiment, and the specific implementation of each unit of the apparatus 300 is the same concept as the above method embodiment, the specific implementation of each unit of the apparatus 300 may refer to the section of the relevant description of the above method embodiment, which will not be described in detail here.

The embodiment of the present disclosure further provides a device, the device comprises a processor and a memory;
the processor is configured to execute instructions stored in the memory to cause the device to implement the method according to any one of the above method embodiments.

The embodiment of the present disclosure further provides a computer-readable storage medium including instructions, the instructions instruct a device to implement any one of the above live broadcast data processing methods.

The embodiment of the present disclosure further provides a computer program product, upon the computer program product being operated on a computer, the live broadcast data processing method according to any one of the above method embodiments.

It may be understood that before using the technical solution of each embodiment of the present disclosure, the user is notified of the type, the usage scope, the usage scenario, and the like of the personal information involved in an appropriate manner, and the authorization of the user is obtained. For example, in response to receiving an active request from the user, prompt information is sent to the user to explicitly prompt the user that the operation requested to be performed will need to obtain and use the personal information of the user. Correspondingly, the user may independently select whether to provide personal information to software or hardware such as an electronic device, an application, a server, or a storage medium which performs the operation of the technical solution of the present disclosure according to the prompt information.

As an optional but non-limiting implementation, in response to receiving an active request from the user, the prompt information may be sent to the user in the form of a pop-up window, for example, in which the prompt information may be presented in the text form. In addition, the pop-up window may further carry a selection control for the user to select "agree" or "disagree" to provide personal information to the electronic device.

It is to be understood that the above-described processes of notifying and obtaining user authorization are merely illustrative and do not limit the implementation of the present disclosure, and other methods satisfying relevant laws and regulations may also be applied to the implementation of the present disclosure.

Other embodiments of the present disclosure will easily occur to those skilled in the art after considering the specification and practicing the present disclosure. The present disclosure is intended to cover any variations, usages or adaptive changes of the present disclosure, which follow the general principle of the present disclosure and include common general knowledge or common technical means in the technical field that are not disclosed in the present disclosure. The specification and the embodiment are to be regarded as an example merely, and the true scope and spirit of the present disclosure is indicated by the following claims.

It is to be understood that the present disclosure is not limited to the precise structure that has been described above and shown in the attached drawings, and various modifications and changes may be made without departing from the scope of the present disclosure. The scope of the present disclosure is limited merely by the appended claims.

The above description is only a preferred embodiment of the present disclosure, rather than limit the present disclosure. Any modification, equivalent substitution, improvement, etc. made within the spirit and principle of the present disclosure should be included within the scope of protection of the present disclosure.

## Claims

1. A live broadcast data processing method, wherein the method comprises:
displaying a live broadcast connection confrontation parameter setting interface;
receiving a live broadcast connection confrontation parameter setting operation acting on the live broadcast connection confrontation parameter setting interface; and
in response to the live broadcast connection confrontation parameter setting operation, obtaining a target live broadcast connection confrontation parameter corresponding to the live broadcast connection confrontation parameter setting operation to determine a live broadcast connection confrontation result according to the target live broadcast connection confrontation parameter.

2. The method according to claim 1, wherein the target live broadcast connection confrontation parameter comprises a parameter of at least one dimension, and the parameter of at least one dimension comprises:
an association relationship between at least one of a confrontation mode, a confrontation process index, the confrontation mode and the confrontation process index, and the confrontation result.

3. The method according to claim 2, wherein the confrontation process index comprises:
an interaction amount corresponding to at least one interaction type obtained in a live broadcast connection confrontation process.

4. The method according to claim 3, wherein the at least one interaction type comprises at least one selected from a group consisting of
a like, a comment, and a gift of a virtual resource.

5. The method according to claim 1, wherein in response to the live broadcast connection confrontation parameter setting operation, obtaining the target live broadcast connection confrontation parameter corresponding to the live broadcast connection confrontation parameter setting operation to determine the live broadcast connection confrontation result according to the target live broadcast connection confrontation parameter comprises:
in response to the live broadcast connection confrontation parameter setting operation, obtaining the target live broadcast connection confrontation parameter corresponding to the live broadcast connection confrontation parameter setting operation, and sending the target live broadcast connection confrontation parameter to a server, so that the server determines the live broadcast connection confrontation result according to the target live broadcast connection confrontation parameter during a live broadcast connection confrontation interaction.

6. The method according to claim 1, wherein the method further comprises:
receiving the live broadcast connection confrontation result sent by the server; and
displaying the live broadcast connection confrontation result on a live broadcast interface.

7. The method according to claim 1, wherein displaying the live broadcast connection confrontation parameter setting interface comprises:
in response to a connection confrontation initiation operation triggered on a live broadcast interface, determining a first live anchor and a second live anchor corresponding to the connection confrontation initiation operation, wherein display windows corresponding to the first live anchor and the second live anchor are displayed on the live broadcast interface;
displaying a connection confrontation mode selection interface;
receiving a creation operation of a custom connection confrontation mode acting on the connection confrontation mode selection interface, and displaying the live broadcast connection confrontation parameter setting interface corresponding to the custom connection confrontation mode.

8. The method according to claim 7, wherein the method further comprises:
displaying live broadcast connection confrontation summary information on the live broadcast interface; and
in response to a trigger operation for the live broadcast connection confrontation summary information, displaying live broadcast connection confrontation detail information.

9. A live broadcast data processing apparatus, wherein the apparatus comprises:
a first display unit, configured to display a live broadcast connection confrontation parameter setting interface;
a first receiving unit, configured to receive a live broadcast connection confrontation parameter setting operation acting on the live broadcast connection confrontation parameter setting interface; and
a first obtaining unit, configured to, in response to the live broadcast connection confrontation parameter setting operation, obtain a target live broadcast connection confrontation parameter corresponding to the live broadcast connection confrontation parameter setting operation to determine a live broadcast connection confrontation result according to the target live broadcast connection confrontation parameter.

10. A device, wherein the device comprises a processor and a memory;
the processor is configured to execute instructions stored in the memory to cause the device to implement the method according to any one of claims 1 to 8.

11. A computer-readable storage medium, comprising instructions, wherein the instructions instruct a device to implement the method according to any one of claims 1 to 8.

12. A computer program product, wherein upon the computer program product being operated on a computer, the method according to any one of claims 1 to 8 is implemented by the computer.
